# EUROPEAN PATENT APPLICATION

(11) **EP 2 720 113 A2**
(43) Date of publication of application: **16.04.2014**
(21) Application number: 13188363.9
(22) Date of filing: 11.10.2013
(51) Int. Cl.: G06F 1/32, G06F 1/20

(54) **Electronic apparatus and method of controlling the same**

(30) Priority: 12.10.2012 KR 20120113792
(71) Applicant: Samsung Electronics Co., Ltd, Gyeonggi-do 443-742 (KR)
(72) Inventor: Chung, Jae-ho, Gyeonggi-do (KR); Kwak, Chang-eop, Gyeonggi-do (KR)
(74) Representative: Walaski, Jan Filip

(57) **Abstract**

An electronic apparatus includes a communication interface unit configured to perform communication with a docking apparatus when the docking apparatus is mounted, a sensor configured to sense a temperature of a central processing unit (CPU), and a controller configured to determine an operation mode of the electronic apparatus according to a mounting state of the docking apparatus and control performance of the CPU according to the determined operation mode and the sensed temperature of the CPU.

## Description

The present invention relates to an electronic apparatus and a method of controlling the same, and more particularly, to an electronic apparatus capable of changing performance thereof according to a dock connection state.

Laptop computers are notebook-sized computers that are easy to carry and transport. Recently, slate personal computers (PCs) or tablet PCs, which include touch screens to further improve mobility and omit keyboard input units, have been developed and widely used.

Since the slate PCs are thinner and smaller than the laptop computers having the same specifications, constant movement and jarring of the slate PCs make them vulnerable to the problem that performance of cooling fans disposed within the slate PCs is degraded. Further, since the slate PCs have no foot or other protrusion extending from a rear portion of a case thereof, cooling performance is degraded due to blockage of an air vent when a user puts down and uses the slate PC on the table. Further, since the user typically holds and uses the slate PC on his/her lap, a skin of the user often comes in contact with the slate PC. Therefore, the user's skin may experience heat transferred from the slate PCs at a greater intensity than the notebook PCs having the same specification.

Therefore, to solve this problem of high heat transfer from the slate PC to a user's skin, central processing units (CPUs) of a low specification have been applied to the slate PCs in a related art or technology to reduce power consumption when surface temperatures of parts thereof approach or become a specific temperature.

However, the reduction in the power consumption of the CPUs cause the performance of the slate PC to be degraded, and thus improvement is needed.

The present general inventive concept provides an electronic apparatus capable of changing performance thereof according to a dock connection state, a method of controlling the same, and a non-transitory computer-recordable recording medium.

Additional features and utilities of the present general inventive concept will be set forth in part in the description which follows and, in part, will be obvious from the description, or may be learned by practice of the general inventive concept.

The foregoing and/or other features and utilities of the present general inventive concept are achieved by providing an electronic apparatus including a communication interface unit configured to perform communication with a docking apparatus when the docking apparatus is mounted, a sensor configured to sense a temperature of a central processing unit (CPU), and a controller configured to determine an operation mode of the electronic apparatus according to a mounting state of the docking apparatus and control performance of the CPU according to the determined operation mode and the sensed temperature of the CPU.

The controller may determine the operation mode of the electronic apparatus to be a desktop mode when the docking apparatus is mounted and determine the operation mode of the electronic apparatus to be a tablet mode when the docking apparatus is not mounted.

The controller may control the CPU to operate at full performance when the operation mode of the electronic apparatus is the desktop mode.

The controller may control the CPU to operate at CPU performance restricted according to the sensed temperature of the CPU when the operation mode of the electronic apparatus is the tablet mode.

The controller may control the CPU to operate with different power consumption according to a plurality of temperature ranges when the operation mode of the electronic apparatus is the tablet mode.

The controller may control the CPU to operate with the different power consumption according to the plurality of temperature ranges and the controller may control the CPU to operate with power consumption lower than power consumption in the desktop mode when the operation mode of the electronic apparatus is the tablet mode.

The electronic apparatus may further include a user interface unit configured to display the mounting state of the docking apparatus when the docking apparatus is mounted.

The communication interface unit may receive a user control command for the electronic apparatus through the docking apparatus when the operation mode of the electronic apparatus is the desktop mode.

The controller may include at least one of a basic input output system (BIOS) and a microcomputer.

The foregoing and/or other features and utilities of the present general inventive concept may also be achieved by providing an electronic apparatus including a central processing unit (CPU) configured to process a command, a sensor configured to sense a temperature of the CPU, and a controller configured to restrict performance of the CPU according to the sensed temperature. The controller may release restriction of the performance of the CPU when the electronic apparatus is connected to a docking apparatus.

The foregoing and/or other features and utilities of the present general inventive concept may also be achieved by providing a method of controlling an electronic apparatus having a plurality of operation modes, the method may including sensing a temperature of a central processing unit (CPU), sensing mounting state to a docking apparatus, determining an operational mode of the electronic apparatus according to the mounting state of the docking apparatus, and controlling performance of the CPU according to the determined operation mode and the sensed temperature of the CPU.

The determining may include determining the operation mode of the electronic apparatus to be a desktop mode when the docking apparatus is mounted and determining the operation mode of the electronic apparatus to be a tablet mode when the docking apparatus is not mounted.

The controlling may include controlling the CPU to operate at full performance when the operation mode of the electronic apparatus is the desktop mode.

The controlling may include controlling the CPU to operate at CPU performance restricted according to the sensed temperature of the CPU when the operation mode of the electronic apparatus is the tablet mode.

The controlling may include controlling the CPU to operate with different power consumption according to a plurality of temperature ranges when the operation mode of the electronic apparatus is the tablet mode.

The controlling may include controlling the CPU to operate with the different power consumption according to the plurality of temperature ranges and controlling the CPU to operate with power consumption lower than power consumption in the desktop mode when the operation mode of the electronic apparatus is the tablet mode.

The method may further include displaying the mounting state of the docking apparatus when the docking apparatus is mounted.

The foregoing and/or other features and utilities of the present general inventive concept may also be achieved by providing a method of controlling an electronic apparatus, the method including sensing a temperature of a central processing unit (CPU), restricting performance of the CPU according to the sensed temperature, and releasing the restricting of the performance of the CPU when the electronic apparatus is connected to a docking apparatus.

The foregoing and/or other features and utilities of the present general inventive concept may also be achieved by providing a non-transitory computer-recordable recording medium including a computer-readable codes to execute a method of controlling an electronic apparatus having a plurality of operation modes, the method including sensing a temperature of a central processing unit (CPU, sensing a mounting state to a docking apparatus, determining an operational mode according to the mounting state of the docking apparatus, and controlling performance of the CPU according to the determined operation mode and the sensed temperature of the CPU.

The foregoing and/or other features and utilities of the present general inventive concept may also be achieved by providing an electronic apparatus having a central processing unit (CPU) disposed therein, the electronic apparatus including a sensor to sense a temperature of the CPU, and a controller to control a performance level of the CPU according to the sensed temperature of the CPU and whether the electronic apparatus is mounted on a docking apparatus.

The electronic apparatus may further include a user interface unit to allow a user to select a power consumption level of the CPU regardless of whether the electronic apparatus is mounted on the docking apparatus.

The controller may control the performance level of the CPU to operate at a reduced power consumption level to reduce heat emitted by the CPU when the electronic apparatus is not mounted to the docking apparatus, and controls the CPU to operate at a full performance level when the electronic apparatus is mounted to the docking apparatus.

The full performance level of the CPU may include the CPU consuming a higher amount of power than the CPU consumes at the reduced power consumption level, thereby resulting in more heat emitted by the CPU.

These and/or other features and utilities of the present general inventive concept will become apparent and more readily appreciated from the following description of the embodiments, taken in conjunction with the accompanying drawings of which:
FIG. 1 is a view illustrating a docking system according to an exemplary embodiment of the present general inventive concept;
FIG. 2 is a view illustrating a detailed configuration of an electronic apparatus of FIG. 1;
FIG. 3 is a view explaining an operation when an electronic apparatus is connected to a docking apparatus according to an exemplary embodiment of the present general inventive concept;
FIG. 4 is a view illustrating operation conditions according to operation modes;
FIG. 5 is a flowchart illustrating a method of controlling an electronic apparatus according to an exemplary embodiment of the present general inventive concept; and
FIG. 6 is a flowchart specifically illustrating the method of controlling an electronic apparatus of FIG. 5.

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

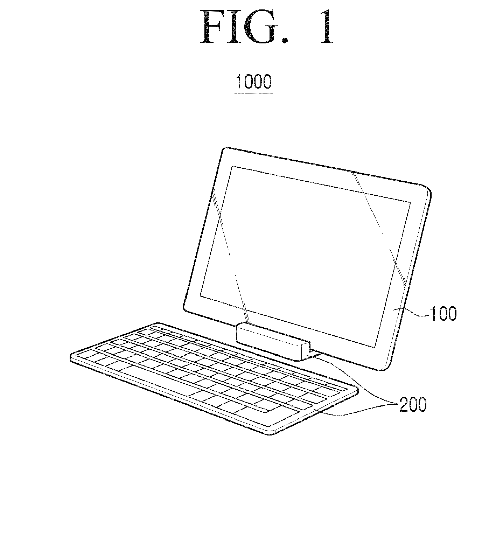

FIG. 1 is a view illustrating a docking system 1000 according to an exemplary embodiment of the present general inventive concept.

Referring to FIG. 1, the docking system 1000 includes an electronic apparatus 100 and a docking apparatus 200, also referred to as a docking station 200.

The electronic apparatus 100 receives a driving command from a user and performs a job according to the received driving command. Further, the electronic apparatus 100 may be physically/electrically connected to the docking apparatus 200. The electronic apparatus 100 may include a personal computer (PC), a portable phone, a smart phone, a portable multimedia player (PMP), an MPEG-1 audio layer 3 (MP3), etc., but is not limited thereto.

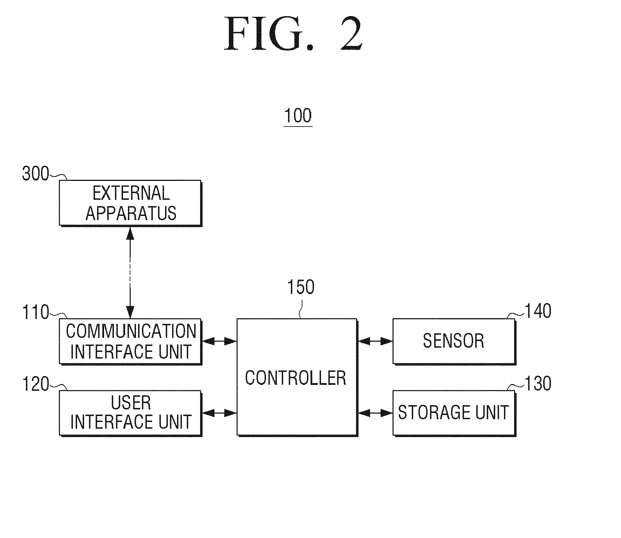

Specifically, the electronic apparatus 100 operates in a tablet mode and controls performance of a CPU according to a temperature of the CPU disposed therein when the electronic apparatus 100 is not connected to the docking apparatus 200. On the other hand, the electronic apparatus 100 operates in a desktop mode and controls the performance of the CPU so that the CPU operates at full performance when the electronic apparatus 100 is connected to the docking apparatus 200. A detailed operation and configuration of the electronic apparatus 100 will be described later with reference to FIG. 2.

The docking apparatus 200 is an apparatus configured to expand a function of the electronic apparatus 100. The docking apparatus 200 does not operate by itself and operates when the electronic apparatus 100 is mounted thereon. Specifically, the docking apparatus 200 expands a user interface function of the electronic apparatus 100. Further, the docking apparatus 200 may supply power to the electronic apparatus 100.

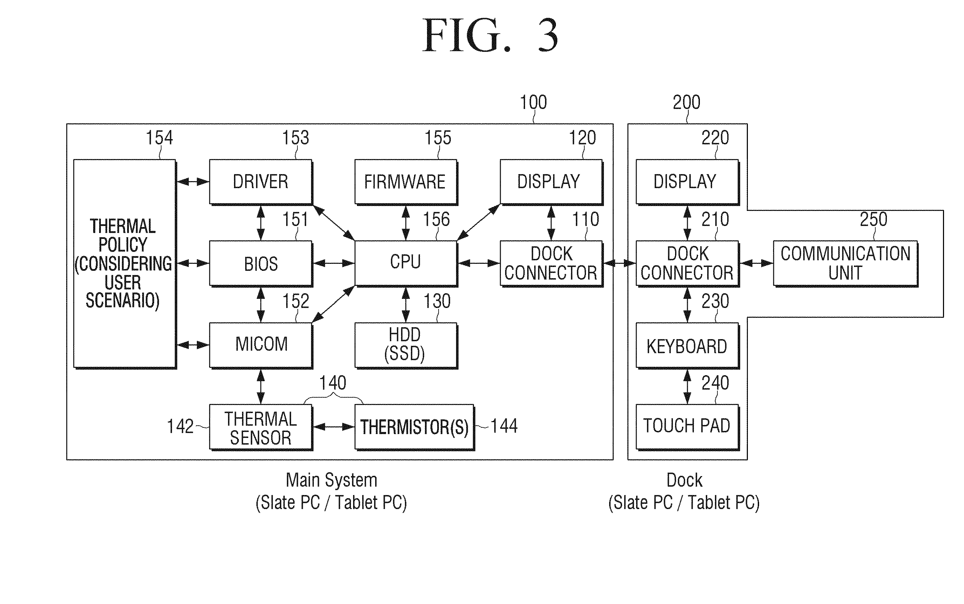

The docking apparatus 200 may expand a communication function of the electronic apparatus 100. Specifically, the docking apparatus 200 may be connected to an external Internet network through a wired local area network (LAN) and the docking apparatus 200 may relay the electronic apparatus 100 to the wired LAN. The detailed operation and configuration of the docking apparatus 200 will be described later with reference to FIG. 3.

In the docking system 1000 according to the above-described exemplary embodiment of the present general inventive concept, the electronic apparatus 100 may control the CPU by focusing on controlling heat emanated from the electronic apparatus 100 when the electronic apparatus 100 is not mounted on, or otherwise connected to, the docking apparatus 200, and may control the CPU to function at full performance when the electronic apparatus 100 is mounted on the docking apparatus 200.

FIG. 2 a view illustrating a detailed configuration of the electronic apparatus 100 of FIG. 1.

Referring to FIG. 2, the electronic apparatus 100 according to the exemplary embodiment may include a communication interface unit 110, a user interface unit e.g. a display) 120, a storage unit 130, a sensor 140, and a controller 150. The electronic apparatus 100 may include a laptop computer, a tablet, an MP3, and a PMP, which are connectable to the docking apparatus 200, but is not limited thereto.

The electronic apparatus 100 has a plurality of operation modes. Here, the plurality of operation modes include a first operation mode (i.e., a tablet mode) in which the electronic apparatus 100 operates in correspondence with a preset first heat design power consumption and a second operation mode (i.e., a desktop mode) in which the electronic apparatus 100 operates in correspondence with a second heat design power consumption that is higher than the first heat design power consumption.

The first operation mode is a mode utilized when the electronic apparatus 100 is not connected to the docking apparatus 200, that is, a mode in a state in which the user can hold and use the electronic apparatus 100. More specifically, the user may place the electronic apparatus 100 in his/her lap. Therefore, the first operation mode is a mode in which the electronic apparatus 100 operates with lower power consumption as the temperature of the CPU is increased to suppress heat generation of the electronic apparatus 100.

The second operation mode is a mode when the electronic apparatus 100 is connected to the docking apparatus 200, that is, a mode during which a probability that the user accesses the electronic apparatus 100 is low. Therefore, the second operation mode is a mode in which the electronic apparatus 100 operates at full performance without altering the power consumption of the CPU, in order to maximize a performance of the electronic apparatus 100.

In the exemplary embodiment of the present general inventive concept, it has been described that the power consumption is not restricted regardless of the temperature of the CPU in the second operation mode. However, the electronic apparatus 100 may operate with different power consumption according to temperature ranges of the CPU even in the second operation mode. Nevertheless, the power consumption according to the temperature ranges of the CPU may be higher than that according to the temperatures in the first operation mode.

The communication interface unit 110 is formed to connect the electronic apparatus 100 to an external apparatus 300 and may be connected to the external apparatus 300 through a LAN and an Internet network as well as through a wireless communication (e.g., wireless communication such as global system to perform mobile communication (GSM), universal mobile telecommunication system (UMTS), long term evolution (LTE), wireless broadband Internet (WiBRO), etc.) manner.

The communication interface unit 110 may perform communication with the docking apparatus 200. Specifically, when the electronic apparatus 100 is connected to the docking apparatus 200, the communication interface unit 110 may receive a user control command from the docking apparatus 200 and transmit an image (or a moving image) to be displayed on the docking apparatus 200. Further, the communication interface unit 110 may be connected to the external apparatus 300 or an Internet network through the docking apparatus 200.

The user interface unit 120 may include a plurality of function keys through which the user can set or select various kinds of functions supported by the electronic apparatus 100 and display various kinds of information provided from the electronic apparatus 100. The user interface unit 120 may be implemented with a device in which an input and an output are simultaneously implemented, such as a touch screen. The user interface unit 120 may further include specific buttons on a keyboard, etc.

The user interface unit 120 may allow the user to select various kinds of information provided to be transferred from the electronic apparatus 100 via the communication interface unit 110 and displayed on the docking apparatus 200. Specifically, when the electronic apparatus 100 is connected to the docking apparatus 200, the user interface unit 120 may control the communication interface unit 110 to display a user interface window that is displayed on the electronic apparatus 100 also on the docking apparatus 200.

In the exemplary embodiment of the present general inventive concept, it has been described that the user interface window is displayed on the docking apparatus 200 only when the electronic apparatus 100 is connected to the docking apparatus 200. However, it may be implemented that the electronic apparatus 100 and the docking apparatus 200 operate in a dual display type when the electronic apparatus 100 is connected to the docking apparatus 200.

The user interface unit 120 may display that the electronic apparatus 100 is connected to the docking apparatus 200 when the electronic apparatus 100 is connected to the docking apparatus 200. At this time, the user interface unit 120 may display information indicating that the electronic apparatus 100 may operate at full performance together with the connection state.

The storage unit 130 stores a program to drive the electronic apparatus 100. Specifically, the storage unit 130 may store the program that includes a plurality of different types of commands required to drive the electronic apparatus 100. Here, the program includes an application program to provide a specific service, as well as an operation program to drive the application program.

The storage unit 130 may be implemented by a storage medium disposed within the electronic apparatus 100, as well as an external storage medium, for example, a removable disk including a universal serial bus (USB) memory, a web server through a network, etc., but is not limited thereto.

The sensor 140 senses the temperature of the CPU. Specifically, the sensor 140 may include a temperature sensor 142 that may be connected to at least one thermistor 144 to sense an internal temperature of the CPU and a surface temperature of the CPU. The at least one thermistor 144 may include a type of resistor whose resistance varies significantly with temperature, more so than in standard resistors.

The sensor 140 may sense whether the electronic apparatus 100 is mounted on the docking apparatus 200. Specifically, the electronic apparatus 100 may include a connector that is physically and/or electrically connectable to the docking apparatus 200, and sense that the electronic apparatus 100 is mounted on the docking apparatus 200 when the docking apparatus 200 is physically and/or electrically connected to the connector. Additionally, when power from an adapter, for example, is input through the docking apparatus 200, the sensor 140 may sense whether the electronic apparatus 100 is mounted on the docking apparatus 200 through the input of the adaptor power.

The controller 150 may control each component within the electronic apparatus 100. Specifically, the controller 150 may determine an operation mode of the electronic apparatus 100 according to whether the electronic apparatus 100 is mounted on the docking apparatus 200. More specifically, the controller 150 may determine the operation mode of the electronic apparatus 100 to be the desktop mode when the electronic apparatus 100 is mounted on the docking apparatus 200, and may determine the operation mode of the electronic apparatus 100 to be the tablet mode when the electronic apparatus 100 is not mounted on the docking apparatus 200.

The controller 150 controls the performance of the CPU according to the determined operation mode and the sensed temperature of the CPU. Specifically, the controller 150 may control the CPU to operate at full performance when the operation mode of the electronic apparatus 100 is in the desktop mode. On the other hand, the controller 150 may control the CPU to operate so that the power consumption of the CPU is reduced when the operation mode of the electronic apparatus 100 is in the tablet mode.

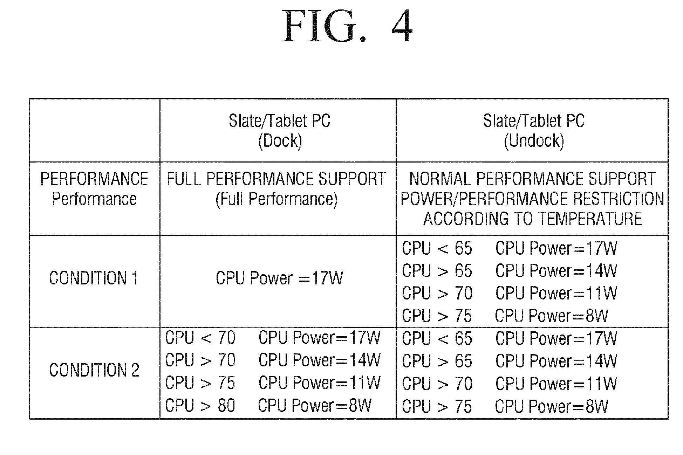

More specifically, the controller 150 may control the CPU to operate at a restricted CPU performance according to the sensed temperature of the CPU. For example, as illustrated in FIG. 4, the controller 150 may control the CPU to operate at different power consumption levels according to a plurality of temperature ranges.

The electronic apparatus 100 according to the above-described exemplary embodiment may control the CPU by focusing on heat usability when the electronic apparatus 100 is not connected to the docking apparatus 200, and may control the CPU to operate at full performance when the electronic apparatus 100 is connected to the docking apparatus 200. The electronic apparatus 100 according to the above-described exemplary embodiment may adaptively control the operation performance of the CPU according to the docking state of the docking apparatus 200 to enhance portability and performance.

FIG. 3 is a view illustrating an operation when the electronic apparatus 100 is connected to the docking apparatus 200 according to an exemplary embodiment of the present general inventive concept.

Referring to FIG. 3, the docking system 1000 of FIG. 1 includes the electronic apparatus 100 and the docking apparatus 200.

The electronic apparatus 100 is connected to the docking apparatus 200. Specifically, the electronic apparatus 100 may include a communication interface unit 110, a user interface unit (i.e., a display) 120, a storage unit 130, a sensor 140, a BIOS 151, a microcomputer 152, a driver 153, a thermal policy 154, a firmware 155, and a CPU 156.

The communication interface unit 110 (more specifically, a dock connector 110) may be formed to connect the electronic apparatus 100 to the docking apparatus 200 and may be connected to the docking apparatus 200 through a serial interface manner such as a USB or a high-definition multimedia interface (HDMI). In the exemplary embodiment of the present general inventive concept, it has described that the electronic apparatus 100 and the docking apparatus 200 are connected in a wired manner. However, the communication interface unit 110 may be implemented to physically engage the electronic apparatus 100 to the docking apparatus 200 and to transmit and receive various kinds of signals between the electronic apparatus 100 and the docking apparatus 200 in a wireless manner.

The communication interface unit 110 may receive a user control command from the docking apparatus 200 and transmit an image to be displayed in the docking apparatus 200. The communication interface unit 110 may perform communication with various apparatuses connected to the docking apparatus 200.

The user interface unit 120 may display various kinds of information provided from the electronic apparatus 100.

The storage unit 130 performs the same function as the storage unit 130 of FIG. 2 and thus repetitive description thereof will be omitted.

The sensor 140 includes the thermistor 144 mounted on a surface of the CPU 156 and the thermal sensor 142 configured to sense a temperature using a resistance value of the thermistor 144.

The BIOS 151 is a program that is in charge of control of a computer and processes the most basic function of the computer when the computer turns on. Specifically, the BIOS 151 may perform initialization on each configuration in the electronic apparatus 100 and perform a series of booting processes when booting the electronic apparatus 100.

The microcomputer (MICOM) 152 performs control of various chip sets in the electronic apparatus 100. Specifically, the control function corresponding to the CPU performance described above may be performed in the MICOM 152.

The driver 153 is a driving program corresponding to various chip sets in the electronic apparatus 100.

The thermal policy 154 is a control value corresponding to the CPU performance according to the exemplary embodiment of the present general inventive concept. The thermal policy 154 may be stored in the BIOS 151. The thermal policy 154 may be stored in the firmware 155.

The firmware 155 is a collection of microprograms to control the hardware and may be stored in a read only memory (ROM).

The CPU 156 is a unit configured to descript a command and perform arithmetic and logical operations and data processing. The CPU 156 changes its power consumption according to a current performance thereof. That is, when the CPU 156 operates at full performance, the power consumption is increased and heat is increased. In contrast, the CPU 156 operates at a low performance, the power consumption is reduced and the heat is reduced.

The docking apparatus 200 is connected to the electronic apparatus 100. Specifically, the docking apparatus 200 includes a dock connector 210, a display 220, a keyboard 230, a touch pad 240, and a communication unit 250.

The dock connector 210 is formed to connect the docking apparatus 200 to the electronic apparatus 100 and may be connected to the electronic apparatus 100 via a USB, an HDMI, and a serial interface, but is not limited thereto. Specifically, the dock connector 210 may transmit a user control command received from the keyboard 230 or the touch pad 240, to be described later, to the electronic apparatus 100. The dock connector 210 may receive an image from the electronic apparatus 100 and transmit the received image to the display 220.

The display 220 displays the received image. Specifically, the display 220 may display the received image from the electronic apparatus 100 through the dock connector 210.

The keyboard 220 and the touch pad 240 include various function keys through which the user can set or select various functions supported by the electronic apparatus 100. A user command received through the keyboard 230 and the touch pad 240 may be transmitted to the electronic apparatus 100 through the dock connector 210.

The communication unit 250 may be included to allow the docking apparatus 200 to connect directly to the Internet, a LAN, or other type of network via wired or wireless communications. As such, the docking apparatus 200 may transfer the Internet connection to the electronic apparatus 100 in order to conserve energy of the electronic apparatus 100 while it is docked and charging. The communication unit 250 may also communicate wirelessly to the external apparatus 300.

FIG. 4 is a view illustrating control conditions according to operation modes.

Referring to FIG. 4, the electronic apparatus 100 according to the exemplary embodiment of the present general inventive concept has a first operation mode and a second operation mode.

In the first operation mode (i.e., the tablet mode), the electronic apparatus 100 operates at normal performance. Specifically, as illustrated in FIG. 4, the electronic apparatus 100 controls the CPU 156 so that the power consumption of the CPU 156 is reduced as the temperature of the CPU 156 is increased. That is, the power consumption of the CPU 156 may be controlled to be in reverse proportion to the temperature of the CPU 156. Although the illustrated example has described that the power consumption is controlled according to the plurality of temperature ranges, that is, that the power consumption is controlled in a stepwise manner corresponding to the sensed temperature, the present general inventive concept may be implemented such that the power consumption is controlled in a linear manner corresponding to the sensed temperature.

In contrast, in the second operation mode (i.e., the desktop mode), the electronic apparatus 100 operates at full performance. Specifically, as illustrated in FIG. 4, in a first embodiment (Condition 1), the CPU 156 is controlled so that the CPU 156 operates with maximum power consumption regardless of the temperature of the CPU 156. However, the CPU 156 is controlled so that the CPU 156 operates with maximum power consumption only when there is a load, and the CPU 156 does not operate with the maximum power consumption when there is no load.

In a second embodiment (Condition 2), the CPU 156 is controlled similar to the first operation mode. Accordingly, the CPU 156 is controlled to operate with a power consumption larger than power consumption in the tablet mode.

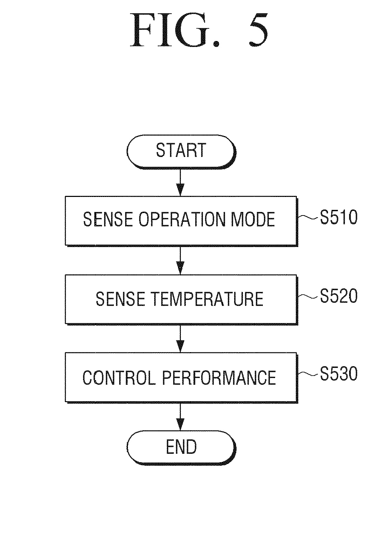

FIG. 5 is a flowchart illustrating a method of controlling the electronic apparatus 100 of FIG. 1, according to an exemplary embodiment of the present general inventive concept.

Referring to FIG. 5, first, the controller 150 senses an operation mode (S510). Specifically, the controller 150 senses whether the electronic apparatus 100 is connected to the docking apparatus 200 and determines the operation mode of the electronic apparatus 100 according to a mounting state of the docking apparatus 200. More specifically, the controller 150 may sense that the dock connector 210 of the docking apparatus 200 is electrically connected to the dock connector 110 or that the electronic apparatus 100 is mounted on the docking apparatus 200 through the input of adaptor power. Then, the operation mode of the electronic apparatus 100 may be determined to be the desktop mode when the electronic apparatus 100 is mounted on the docking apparatus 200, while the operation mode of the electronic apparatus 100 may be determined to be the tablet mode when the electronic apparatus 100 is not mounted on the docking apparatus 200.

The controller 150 senses a temperature of the CPU 156 (S520). Specifically, the controller 150 may sense a surface temperature of the CPU 156 using the temperature sensor 142 that may be connected to the thermistor 144. The exemplary embodiment has illustrated and described that the operation mode is sensed and then the temperature of the CPU 156 is sensed, but the sensing of the operation mode and the sensing of the CPU 156 temperature are performed in a real time and thus it may be implemented that any one of the sensing of the operation mode and the sensing of the CPU temperature may be first performed.

The controller 150 may control the performance of the CPU 156 according to the determined operation mode and the sensed temperature of the CPU 156 (S530). The controller 150 may control the CPU 156 to operate at full performance when the operation mode of the electronic apparatus 100 is in the desktop mode. In contrast, the controller 150 may control the CPU 156 to operate with reduced power consumption of the CPU 156 when the operation mode of the electronic apparatus 100 is in the tablet mode. Specifically, the controller 150 may control the CPU 156 to operate with the CPU 156 performance restricted according to the sensed temperature of the CPU 156. For example, as illustrated in FIG. 4, the controller 150 may control the CPU 156 to operate with different power consumption according to the plurality of CPU 156 temperature ranges.

The control method according to the above exemplary embodiment may control the CPU 150 by focusing on the heat usability when the electronic apparatus 100 is not connected to the docking apparatus 200, and may control the CPU 156 at full performance when the electronic apparatus is connected to the docking apparatus 200. The electronic apparatus 100 according to the exemplary embodiment may adaptively control the operation performance of the CPU 156 according to the mounting state of the docking apparatus 200 to enhance portability and performance. The control method of FIG. 5 may be executed on the electronic apparatus 100 having the configuration of FIG. 2 or FIG. 3, or to electronic apparatuses having other configurations.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

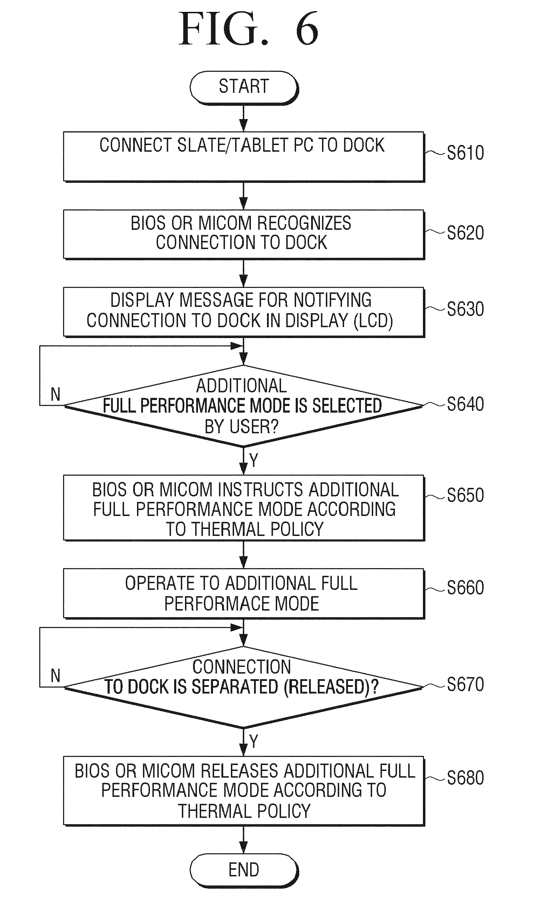

FIG. 6 is a flowchart specifically illustrating the control method of FIG. 5.

Referring to FIG. 6, the electronic apparatus 100 is physically connected to the docking apparatus 200 (S610).

When the electronic apparatus 100 is connected to the docking apparatus 200, the BIOS or the MICOM may recognize that the electronic apparatus 100 is connected to the docking apparatus 200 (S620).

The electronic apparatus 100 displays that the electronic apparatus 100 is connected to the docking apparatus 200 (S630). Specifically, the electronic apparatus 100 may display that the electronic apparatus 100 is connected to the docking apparatus 200 to operate at full performance, and may also receive confirmation of whether the user desires the CPU to operate at full performance via an input from the user.

When the user does not select that the CPU operates at full performance (S640-N), the electronic apparatus 100 controls the performance of the CPU, as in the related art. That is, the BIOS or MICOM may control the CPU so that the performance of the CPU is restricted according to the temperature of the CPU.

When the user selects that the CPU operates at full performance (S640-Y), the BIOS or MICOM may control the CPU to operate at full performance according to the preset thermal policy (S650 and S660).

Next, when the electronic apparatus 100 is separated from the docking apparatus 200 (S670-Y), the BIOS or MICOM may control the performance of the CPU according to the thermal policy in the first operation mode (S680).

The control method according to the above-described exemplary embodiment control the CPU by focusing on the heat usability when the electronic apparatus is not connected to the docking apparatus and control the CPU at full performance when the electronic apparatus is connected to the docking apparatus. Therefore, the control method according to the above-described exemplary embodiment adaptively controls the operation performance of the CPU according to the mounting state of the docking apparatus to enhance portability and performance. The control method of FIG. 6 may be applied to the electronic apparatus having the configuration of FIG. 2 or FIG. 3, or to electronic apparatuses having the other configurations.

The foregoing exemplary embodiments and advantages are merely exemplary and are not to be construed as limiting the present inventive concept. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

## Claims

1. An electronic apparatus having a central processing unit CPU and being operable in a plurality of operation modes, the apparatus comprising:
a communication interface unit configured to perform communication with a docking station when the apparatus is connected to the docking station;
a sensor configured to sense a temperature of the CPU; and
a controller configured to determine an operation mode of the apparatus depending on whether the apparatus is connected to the docking station and to control performance of the CPU according to the determined operation mode and the sensed temperature.

2. The electronic apparatus as claimed in claim 1, wherein the controller is arranged to determine the operation mode of the apparatus to be a desktop mode when the apparatus is connected to the docking station and to determine the operation mode of the apparatus to be a tablet mode when the apparatus is not connected to the docking station.

3. The electronic apparatus as claimed in claim 2, wherein the controller is arranged to control the CPU to operate at full performance when the operation mode of the electronic apparatus is the desktop mode.

4. The electronic apparatus as claimed in claim 2 or 3, wherein the controller is arranged to control the CPU to operate at a CPU performance that is restricted according to the sensed temperature of the CPU when the operation mode of the electronic apparatus is the tablet mode.

5. The electronic apparatus as claimed in claim 2, 3 or 4, wherein the controller is arranged to control the CPU to operate with different power consumption according to a plurality of temperature ranges when the operation mode of the electronic apparatus is the tablet mode.

6. The electronic apparatus as claimed in any one of claims 2 to 5, wherein the controller is arranged to control the CPU to operate with power consumption lower than power consumption in the desktop mode when the operation mode of the electronic apparatus is the tablet mode.

7. The electronic apparatus as claimed in any one of claims 2 to 6, wherein the communication interface unit is arranged to receive a user control command for the electronic apparatus through the docking station when the operation mode of the electronic apparatus is the desktop mode.

8. The electronic apparatus as claimed in any one of the preceding claims, wherein the controller is configured to restrict performance of the CPU according to the sensed temperature, and to release the restriction of the performance of the CPU when the electronic apparatus is connected to the docking station.

9. A method of controlling an electronic apparatus having a central processing unit CPU and operable in a plurality of operation modes, the method comprising:
sensing a temperature of the central processing unit CPU;
sensing a connection state to a docking station;
determining an operational mode of the electronic apparatus according to the connection state; and
controlling performance of the CPU according to the determined operation mode and the sensed temperature of the CPU.

10. The method as claimed in claim 9, wherein the determining includes determining the operation mode of the electronic apparatus to be a desktop mode when the docking station is connected and determining the operation mode of the electronic apparatus to be a tablet mode when the docking station is not connected.

11. The method as claimed in claim 10, wherein the controlling includes controlling the CPU to operate at full performance when the operation mode of the electronic apparatus is the desktop mode.

12. The method as claimed in claim 10 or 11, wherein the controlling includes controlling the CPU to operate at a CPU performance restricted according to the sensed temperature of the CPU when the operation mode of the electronic apparatus is the tablet mode.

13. The method as claimed in claim 12, wherein the controlling includes controlling the CPU to operate with different power consumption according to a plurality of temperature ranges when the operation mode of the electronic apparatus is the tablet mode.

14. The method as claimed in claim 13, comprising controlling the CPU to operate with power consumption lower than power consumption in the desktop mode when the operation mode of the electronic apparatus is the tablet mode.

15. The method of any one of claims 9 to 14, the method comprising:
restricting performance of the CPU according to the sensed temperature; and
releasing the restricting of the performance of the CPU when the electronic apparatus is connected to the docking station.
